Europäisches Patentamt

European Patent Office

Office européen des brevets

(11) Publication number: **0 029 443**
**B1**

(12) **EUROPEAN PATENT SPECIFICATION**

(45) Date of publication of patent specification: **16.05.84**

(21) Application number: **80901054.9**

(22) Date of filing: **02.06.80**

(86) International application number:
**PCT/AU80/00018**

(87) International publication number:
**WO 80/02687 11.12.80 Gazette 80/28**

(51) Int. Cl.³: **C 08 F 2/44,** C 08 F 212/08,
C 08 F 292/00

(54) **PROCESS FOR COMPOSITE POLYMER BEADS.**

(30) Priority: **08.06.79 AU 9114/79**

(43) Date of publication of application:
**03.06.81 Bulletin 81/22**

(45) Publication of the grant of the patent:
**16.05.84 Bulletin 84/20**

(84) Designated Contracting States:
**FR**

(56) References cited:
**AU-B- 439 432
AU-B- 493 973
FR-A-1 461 792
GB-A-1 407 257
SU-A- 476 279
SU-A- 496 287
US-A-3 884 871
US-A-3 941 718**

(73) Proprietor: **ICI AUSTRALIA LIMITED
ICI House 1 Nicholson Street P.O.Box 4311
Melbourne Victoria 3001 (AU)**
(73) Proprietor: **COMMONWEALTH SCIENTIFIC AND
INDUSTRIAL RESEARCH ORGANIZATION
Limestone Avenue
Campbell Australian Capital Territory 2601 (AU)**

(72) Inventor: **LUBBOCK, Frederick John
2 Hepburn Avenue
Beaumaris Victoria, 3193 (AU)**
Inventor: **MOK, Christopher Cheng Kwai
2/10 Mary Street
Clayton Victoria, 3168 (AU)**
Inventor: **ELDRIDGE, Robert James
11 Flowerdale Road
Moorabbin Victoria, 3189 (AU)**

(74) Representative: **Rinuy, Guy et al
Cabinet Rinuy et Santarelli 14, Avenue de la
Grande Armée
F-75017 Paris (FR)**

Courier Press, Leamington Spa, England.

## Description

### TECHNICAL FIELD

This invention relates to polymeric composites which are useful for the separation of small quantities of material from solution. In particular it relates to processes for the manufacture of polymeric material containing non-polymeric particulate matter.

Australian patent 493 973 discloses the incorporation of particles into fluid dispersions prior to polymerization so that the cured polymer will be strengthened or stiffened by a suitable choice of particulate matter. There is no suggestion of forming beads containing particles which are useful as absorbents after their incorporation into the polymer. Australian patent 439 432 discloses vesiculated granules with cell-like structure which contain opacifying agents. The cells are incompletely bounded by polymeric surfaces.

The incorporation of particulate matter, such as for example magnetic particles, into polymeric resin beads to facilitate the handling and uses of these resins in ion exchange processes is well known. The particle-containing resins utilize the discovery that when finely divided ferromagnetic-containing ion exchange adsorbents are flocculated by magnetic forces of a suitable strength and agitated in the liquid to be treated, they still exhibit the high rates of adsorption appropriate to the original resin bead size but have the mechanical characteristics normally associated with larger resin beads. In another application ferromagnetic-containing resin beads may be used in mixed beds with other non-ferromagnetic beads and conveniently separated as desired, by the application of a magnetic field.

In addition to these ion exchange resin applications, magnetic particles have also been incorporated in composite adsorbents containing common absorbing materials such as activated carbon which is used extensively throughout the chemical and process industries. It is typically used in the form of carbon black, graphite, or charcoals. Other materials with suitable adsorbing properties are the various naturally-occurring clays, for example, fuller's earth, and other mineral powders. Examples of the latter include quartz, silica gel, titanium dioxide, bauxite, zeolite and many metallic oxides.

In this approach the composite adsorbent material typically comprises adsorbent particles and magnetic particles embedded in a porous matrix of organic polymeric material, the porosity of the matrix being such as to allow small molecules of molecular weight up to several hundred to enter freely into the interstitial structure of the matrix but to exclude large molecules of higher molecular weight whereby the composite material functions selectively to adsorb dissolved materials from solution. The inclusion of magnetic particles enables the composite adsorbents to be easily and rapidly separated from the solutions being treated even when those solutions contain other suspended particulate matter.

### BACKGROUND ART

Conventional ion-exchange resins and composite adsorbents have suffered from a number of disadvantages.

First, there has been the risk of interaction between the magnetic particles and the components of the system in which the ion exchange resins or composite adsorbents have been employed. This is a particularly serious problem with the porous composite adsorbents referred to above. Many of the common magnetic materials, such as ferrites, cannot be readily used at a pH below 7 and are rapidly degraded at a low pH.

Secondly, it has been very difficult to avoid "flushing" of the particulate matter during the preparation of the resin or composite adsorbent bead. "Flushing" refers to the tendency of the particle to leave the polymer during the formation of the bead. The particles frequently are completely excluded from the forming bead or concentrate and protrude from the outer surfaces of the bead. Where attempts have been made to encapsulate magnetic particles in a protective coating prior to incorporation in a resin or composite adsorbent, flushing has also been a problem.

A further problem relates to the processes of manufacturing ion exchange resins. Frequently it is desired to prepare polymeric beads and by subsequent reaction schemes to introduce onto these beads functional groups which will provide the desired ion exchange function. When magnetic particles are incorporated into the beads the range of possible subsequent chemical reactions of the polymeric bead matrix can be severely limited by the susceptibility of the magnetic material to attack. For example, for the important class of cross-linked styrene based resins key processes such as chloromethylation and sulphonation with chlorosulphonic acid or oleum cannot be used.

### DISCLOSURE OF INVENTION

It is an object of our invention to provide a process of preparing polymeric beads containing particulate matter such as magnetic material, and which do not suffer from the disadvantages described above.

Accordingly we provide a process of incorporating non-polymeric particulate matter into a polymeric matrix, which process comprises a first step of dispersing the non-polymeric particulate matter in a medium comprising one or more vinyl monomers selected from the group consisting of styrene and vinyltoluenes and a cross-linking agent, with a polymeric dispersant which is a copolymer prepared from a first component consisting of at least one monomer selected from the group consisting of at least one monomer selected from the group consisting of tertiary-nitrogen-containing vinyl monomers and vinyl oxysilanes, a second step of adding a catalyst initiator, and a third step of polymerizing the said vinyl monomers.

The nature of the polymeric dispersant and of the vinyl monomers is critical. Many dispersants and monomers are unsuitable and lead either to a porous polymeric matrix through which reagents may diffuse to attack the non-polymeric particulate matter, or to flushing of the non-polymeric particles from the forming polymer leaving the particles unprotected.

The polymeric dispersants used in the process of our invention are copolymers prepared from two or more vinyl monomers. At least one monomer is selected from vinyl aromatic hydrocarbons, such as styrene and the vinyltoluenes. This monomer or groups of monomers forms the major component of the copolymer and is preferably from 80 to 97% of the copolymer on a molar basis.

At least one monomer is selected from the group consisting of tertiary-nitrogen-containing vinyl monomers and vinyl oxysilanes. Typical examples of this group of monomers are 2-vinylpyridine, 4-vinylpyridine, methyl dimethyl-aminomethacrylate, vinyltrimethoxysilane, and vinyltriethoxysilane. Monomers chosen from this group preferably comprise 20 to 3% of the copolymer on a molar basis.

The most preferred copolymers are styrene/4-vinylpyridine, styrene/2-vinylpyridine and styrene/vinyltriethoxysilane. The molecular weight range of the preferred copolymer is 10 000 to 30 000.

The vinyl monomers used to prepare the polymeric matrix are vinyltoluenes and styrene, optionally substituted. Substituted styrenes may include, for example, polyfluorostyrene but the preferred monomer is styrene. Two or more of these monomers may be used in combination.

Suitable crosslinking agents for the preparation of polymers from these monomers can be selected by those skilled in the art. Preferable crosslinking agents are divinylbenzene, unsaturated polyesters, and triallyloxyethane. Divinylbenzene is the preferred cross-linking agent when the vinyl monomer is styrene.

Generally a catalyst initiator is added with the cross-linking agent to promote the cross-linking. Appropriate catalyst initiators are well known to those skilled in the art, for example in the case of divinylbenzene crosslinking agent, benzoyl peroxide may be employed.

In the process of our invention the polymeric dispersant is used to disperse the non-polymeric particulate matter in a media containing the vinyl monomers and the crosslinking agent. On addition of the catalyst the vinyl monomers polymerize and form a matrix enclosing the non-polymeric particles. By adjusting the speed of stirring and the proportion of reagents it is possible to produce particles coated with a thin protecting layer of polymer or composites of several particles embedded in a polymer matrix bead.

A wide range of non-polymeric particles may be incorporated in polymeric matrixes by the process of our invention, for example, magnetic materials, inorganic oxides and silicates, minerals and pigments. While some of these materials, for example, titanium dioxide, have previously been incorporated into polymeric matrixes by conventional dispersants it is a particular feature of the process of our invention that a wide range of magnetic materials can be readily and effectively incorporated into polymers.

Furthermore the nature of the magnetic material that can be incorporated by the process of our invention is not narrowly critical. Typical magnetic materials are iron and alloys of iron and metals such as for example, cobalt, nickel, manganese, molybedenum, and aluminium, iron-silicon alloys, magnetic ceramics and ferrites. Suitable ferrites include the naturally occurring magnetite ($Fe_3O_4$), maghemite ($\gamma$-$Fe_2O_3$), jacobsite, franklinite, magnesioferrite, and magnetoplumbite. Chromium dioxides may also be used.

In a preferred embodiment of our process the nonpolymeric particles are pre-coated with the polymeric dispersant prior to formation of the cross-linked polymeric coating.

## BEST MODE OF CARRYING OUT THE INVENTION

The weight ratio of the polymer forming components to the non-polymeric particulate matter is adjusted to avoid too high a proportion of non-polymeric particles leading to incomplete covering of the non-polymeric materials, or too low a proportion for the particular application, e.g., too little magnetism where magnetic particles are being incorporated. High levels of the non-polymer particles can also lead to a thick paste where the non-polymeric particles are difficult to disperse.

Preferably the weight ratio of non-polymeric particles to the polymeric dispersant is in a range from 12:1 to 5:1 while the weight ratio of polymeric dispersant to monomers is in a range from 1:5 to 1:20. When the process is used to encapsulate individual magnetic particles in a protective coating prior to incorporation of the protected magnetic particles into ion exchange resins or composite adsorbents, the weight ratio of magnetic particles to polymer coating is preferably close to unity.

In the embodiment where the non-polymeric particles are coated with polymeric dispersant in a pre-coating step before the main polymerization step, this dispersant is conveniently that used in the subsequent polymerization step. This precoating of the particles with polymeric dispersant is more effective if heat is applied, for example by refluxing the non-polymeric particles in a solution of the dispersant in a solvent inert to the particles such as xylene. After refluxing the solvent is removed by evaporation. For this pre-coating step the weight ratio of polymeric dispersant to particles may be in the range of 5:1 to 30:1, preferably in the range of 8:1 to 16:1.

In a preferred embodiment of our process the polymerization is carried out with an organic phase containing the monomers and an aqueous phase containing a suspension stabilizer, such as polyvinylalcohol. It is important to wash the coated particles after the polymerization step to remove this stabilizer and thus avoid difficulties in the subsequent incorporation of the coated particles into ion exchange resins and composite adsorbents.

The weight ratio of organic phase to aqueous phase is preferably in the range from 1:5 to 1:20, preferably in the range of 1:10 to 1:16. The size of the coated particles is influenced by the apparent viscosity of the aqueous phase. Viscosity is largely determined by concentration and for polyvinylalcohol a useful concentration range is 4.5—5.5% w/w, with the addition of 10—40% w/w calcium chloride. Coated particles in the size range from 1 to 1 000 $\mu$m can readily be prepared, the larger size requiring a calcium chloride concentration near 10%.

The preferred size is determined by the application to which the coated particles are put. Composite adsorbents, for example, are typically beads of approximate diameter 200—300 $\mu$m, and the size of coated magnetic particles incorporated into such adsorbents must be such as to allow adequate packing into the beads. The desired coated magnetic particle size is therefore 1—15 $\mu$m and this can be achieved in the above organic phase/aqueous phase embodiment of our process when about 30% w/w calcium chloride is used. If the magnetic material is initially of a larger particle size, it may be milled in the polymerization medium prior to the addition of the polymerization catalyst or initiator. This milling is also advantageous in ensuring that the individual particles are thoroughly wetted with dispersant.

Polymer bead size is influenced by the viscosity of the aqueous phase, the stirring speed, and the time of stirring. Optimum conditions can be readily determined for particular magnetic materials and polymers by those skilled in the art. The choice of temperature is to some extent influenced by the nature of the catalyst initiators used, for example, 70—80°C with benzoyl peroxide, and 65—70°C with azo-bis-butyronitrile.

INDUSTRIAL APPLICABILITY

One of the applications of the process of our invention is the preparation of coated ferromagnetic particles and composite adsorbents containing said particles, wherein the ferromagnetic particles are resistant to attack by components of the system being treated with the composite adsorbents. There are some acid-resistant magnetic materials available, for example the "Metglas" amorphous alloys ("Metglas" is a trademark of Allied Chemical Company, New Jersey), but none of these have the high magnetic permeability required for particles incorporated into composite adsorbents.

The preferred magnetic materials for this application are the ferrites, and particularly magnetite and maghemite. These materials are less dense than the alloys and are readily dispersed in the polymerization medium. They are also easily milled, for example, in the embodiment of our invention where the particles are milled in the polymerization medium prior to the addition of the polymerization initiator.

Ferromagnetic particles prepared by the process of our invention are stable in the pH range from 14 to 2. In contrast to unprotected magnetic material they can be readily used in aqueous solutions of acids, such as acetic acid. Even below pH 2 some protection is provided.

A further application for the coated magnetic particles prepared by the process of our invention is in the preparation of composite magnetic ion exchange resins. Beads comprising the cross-linked styrene polymer of our process can be converted to resins by processes such as chloromethylation and sulphonation with chlorosulphonic acid or oleum without significant attack on the magnetic particles incorporated into the beads. There has previously been no satisfactory process for such composite resins.

Other particulate matter may be incorporated into the polymer beads of our invention in addition to magnetic particles. For example, there may be added weighting agents such as zircon and other minerals, pigments, and fillers of various types.

The invention is now illustrated by, but not limited to, the following examples:

Example 1
*Preparation of polymeric dispersant*
A mixture of styrene (90 g), 4-vinylpyridine (10 g), and benzoyl peroxide (1.27 g) was added dropwise to toluene (100 ml; nitrogen purged) over 3 hours at 100°C. The solution was then refluxed for 4—5 hours until a golden-coloured copolymer was obtained. The copolymer is stable to air but will thicken if left standing for longer periods.

Example 2
The procedure of Example 1 was repeated except that the quantity of 4-vinylpyridine was 20 g.

Example 3
The procedure of Example 1 was repeated except that the quantity of styrene was 100 g and the 4-vinylpyridine was replaced by an equal weight of vinyltrimethoxysilane.

Example 4

*Pre-coating of magnetic particles*

A sample of Bayer S11 $\gamma$-Fe$_2$O$_3$ was coated with the styrene/4-vinylpyridine copolymer of Example 1 by refluxing the sample in xylene with 6.25% of its weight of copolymer. The xylene was then removed by distillation.

Examples 5 and 6

The procedure of Example 4 was repeated using, respectively, the copolymers of Examples 2 and 3.

Example 7

*Preparation of coated magnetic particles*

A mixture of the pre-treated $\gamma$-Fe$_2$O$_3$ (52 g) of Example 4, styrene (52 g), divinylbenzene (10 g), and the styrene/4-vinylpyridine copolymer (10 g) of Example 1 was glass-ball milled for about 6 hours at ambient temperature. Benzoyl peroxide (1.0 g) was then added and the milling continued for 1 hour. The mixture was decanted from the glass balls and added to an aqueous suspension containing polyvinyl alcohol (500 g of 10.76% solution) dissolved in calcium chloride solution (600 mls; 40% aqueous solution).

The mixture was dispersed by vigorous stirring at 1500 rpm for about 15—20 minutes. At this stage the desired particle size (2—15 $\mu$m) had been achieved and the stirring speed was reduced to 300 rpm. The temperature was raised to 80°C to initiate the styrene/divinylbenzene polymerization (approximately 16 hours).

The suspension was then diluted with hot water and the coated particles were separated from the polyvinyl alcohol solution by centrifugation, followed by several successive hot-water washings and centrifugations to remove adhering solution. The coated particles were finally washed with ethanol and acetone and recovered by filtration.

Example 8 and 9

The procedure of Example 7 was repeated using, respectively, the coated particles of Examples 5 and 6, and in each case the polymeric dispersant was that previously used to pre-coat the particles. If the polymeric dispersant was omitted during this coating procedure, some of the magnetic particles were "flushed" from the polymerizing beads and remained partly or completely uncoated and unprotected after the polymerization reaction was complete.

Example 10

The coated particles of Example 7 were suspended in glacial acetic acid and the weight loss measured at various time intervals to determine the extent of attack on the magnetic material by the acid medium. The results are tabled below together with data from a comparison experiment with a sample of the magnetic material that had not been given a protected coating.

Loss of Fe$_2$O$_3$ (% w/w)

| Sample | Days | | | | | |
|---|---|---|---|---|---|---|
| | 1 | 6 | 14 | 22 | 30 | 82 |
| Unprotected $\gamma$-Fe$_2$O$_3$ | 0.27 | 0.45 | 0.64 | 0.93 | 1.0 | 1.8 |
| Protected $\gamma$-Fe$_2$O$_3$ (Example 7) | 0.11 | 0.12 | 0.14 | 0.16 | 0.30 | 0.29 |

Similar protection against attack by acetic acid was found with the protected particles of Examples 8 and 9.

Example 11

*Preparation of beads comprising $\gamma$-ferric oxide*

A mixture of the pre-treated $\gamma$-Fe$_2$O$_3$ (47 g) of Example 4, styrene (69.6 g), divinylbenzene (9.4 g), and the styrene/4-vinylpyridine copolymer (4.0 g) of Example 1 was glass-ball milled for about $4\frac{1}{2}$ hours at ambient temperature. Benzoyl peroxide (1.0 g) was then added and the milling continued for 1 hour. The mixture was decanted from the glass balls and added to an aqueous suspension containing polyvinyl alcohol (400 g of 10.76% solution) dissolved in calcium chloride solution (600 mls; 23.0 aqueous solution).

The mixture was dispersed by vigorous stirring at 250 rpm for about 15—20 minutes. At this stage the desired bead size 50—500 $\mu$m) had been achieved and the stirring speed was reduced to 100 rpm. The temperature was raised to 80°C to initiate the styrene/divinylbenzene polymerization (approximately 16 hours).

The suspension was then diluted with hot water and the coated beads were separated from the polyvinyl alcohol solution by sieves, followed by several successive hot-water washings. The coated beads were finally washed with ethanol and acetone and recovered by filtration.

Example 12
*Preparation of beads comprising chromium dioxide*

Styrene-4-vinylpyridine copolymer (12.6 g) was dissolved into styrene (111 g) and divinylbenzene (7.80 g) monomers. To the monomer mixture was added $CrO_2$ (60 g) and the composite was glass-ball milled for 6 hours. Benzoyl peroxide (1.0 g), as an initiator was added to the mixture and further milled for 1 hour. The glass beads were then separated by filtering the monomer content through a coarse sieve. The filtrate was dispersed into a previously prepared aqueous suspension containing polyvinyl alcohol (PVA) (600 g, of 10.76% solution) dissolved in 900 ml of a 30% calcium chloride solution.

The composite was dispersed at 200 rpm until the desired bead size of 150—200 $\mu$m was obtained. The stirrer speed was then reduced to 100 rpm and the aqueous suspension was heated to 77—80°C (internal) or 90° (external temperature) to initiate the polymerization.

The suspension was diluted with some hot water and the $CrO_2$ beads were collected by pouring the content through a very fine sieve (usually 100 $\mu$m sieve) and washing the beads with copious amounts of warm water to remove any residual PVA on the beads. They were then transferred to a large sintered funnel and further washed with ethanol and with acetone.

Example 13
*Preparation of beads comprising zircon/chromium dioxide (1:1)*

Styrene-4-vinylpyridine copolymer (48.7 g) was dissolved into styrene (333 g) and divinylbenzene (23.6 g) monomers. To the monomer mixture was added $CrO_2$ (130 g) and $ZrSiO_4$ (130 g) and the composite was glass-ball milled for $6\frac{1}{2}$ hours. Benzoyl peroxide (3.0 g), as an initiator was added and milled into the mixture for another 1 hr. The glass beads were then separated from the monomer mixture by filtration using a coarse sieve. The filtrate was dispersed into a previously prepared aqueous suspension containing PVA (2 000 g, of an 8.75% solution) dissolved in 2 500 g of a 21.6% calcium chloride solution.

The composite was dispersed at 250 rpm until the desired bead size of 250—700 $\mu$m was obtained. The stirrer speed was then reduced to 100 rpm and the aqueous suspension heated to 77—80°C (int) or 90°C (ext) to initiate the polymerization.

Fairly firm beads were obtained after 2 hours, but left for 16 hours to complete the polymerization. The aqueous suspension was diluted with some hot water and the $CrO_2/ZrSiO_4$ beads were filtered through a fine sieve (100 $\mu$m sieve) and the collected beads washed with copious amounts of warm water to remove residual PVA adhering on the beads. The beads were then transferred to a large sintered funnel and further washed with ethanol and then with acetone.

**Claims**

1. A process of preparing polymeric beads containing non-polymeric particulate matter and in a size range from 1 to 1000 micrometres which process comprises a first step of dispersing the non-polymeric particulate matter in a medium comprising one or more vinyl monomers selected from the group consisting of styrene and vinyltoluenes and a cross-linking agent, with a polymeric dispersant which is a copolymer prepared from a first component consisting of at least one monomer selected from the group consisting of vinylaromatic hydrocarbons and a second component consisting of at least one monomer selected from the group consisting of tertiary-nitrogen-containing vinyl monomers and vinyl oxysilanes, a second step of adding a catalyst initiator, and a third step of polymerizing the said vinyl monomers.

2. A process according to claim 1 wherein the non-polymeric particulate matter comprises magnetic particles.

3. A process according to claim 2 wherein the magnetic particles are selected from the group consisting of ferrites and chromium dioxide.

4. A process according to claim 2 or 3 wherein the non-polymeric particulate matter comprises zircon.

5. A process according to any one of claims 1 to 4 wherein the second component is selected from the group consisting of 2-vinylpyridine, 4-vinylpyridine, methyl dimethylaminomethacrylate, vinyltrimethoxysilane, and vinyltriethoxysilane.

6. A process according to any of claims 1 to 5 wherein the copolymer is selected from the group consisting of styrene/2-vinylpyridine, styrene/4-vinylpyridine, and styrene/vinyltriethoxysilane.

7. A process according to claim 6 wherein the copolymer contains from 80 to 97% on a molar basis of the first component and the balance is the second component.

8. A process according to any one of claims 1 to 7 wherein the weight ratio of non-polymeric particulate matter to the polymeric dispersant is in a range from 12:1 to 5:1 and the weight ratio of polymeric dispersant to vinyl monomers is in a range from 1:5 to 1:20.

9. A process according to any one of claims 1 to 8 wherein the crosslinking agent is divinylbenzene.

10. A process according to any one of claims 1 to 9 wherein in the first step the said non-polymeric particulate matter is pre-coated with the said polymeric dispersant and then the said vinyl monomers and the said crosslinking agents are added.

11. A process according to any one of claims 1 to 10 wherein the polymerization is carried out with an organic phase containing the vinyl monomers and an aqueous phase containing a suspension stabilizer.

12. A process according to claim 11 wherein the suspension stabilizer is polyvinyl alcohol.

13. A process according to claim 11 or 12 wherein the weight ratio of organic phase to aqueous phase is in a range from 1:5 to 1:20.

14. A process according to claim 13 wherein the weight ratio of organic phase to aqueous phase is in a range from 1:10 to 1:16.

15. Polymeric beads in a size range from 1 to 1000 $\mu$m comprising non-polymeric particulate matter and prepared by the process of any one of claims 1 to 14.

16. Polymeric beads according to claim 15 wherein the non-polymeric particulate matter comprises magnetic particles.

17. Polymeric beads according to claim 16 comprising zircon.

**Revendications**

1. Procédé de préparation de grains polymériques contenant une matière non polymérique en particules et dans une plage de diamètres de 1 à 1000 micromètres, procédé qui comprend une première étape de dispersion de la matière non polymérique en particules dans un milieu comprenant un ou plusieurs monomères vinyliques choisis entre le styrène et les vinyltoluènes et un agent de réticulation, avec un dispersant polymérique qui est un copolymère préparé à partir d'un premier composant consistant en au moins un monomère choisi dans le groupe formé d'hydrocarbures vinylaromatiques et un second composant formé d'au moins un monomère choisi dans le groupe comprenant des monomères vinyliques contenant de l'azote tertiaire et des vinyloxysilanes, une deuxième étape d'addition d'un initiateur de catalyseur et une troisième étape de polymérisation desdits monomères vinyliques.

2. Procédé suivant la revendication 1, dans lequel la matière non polymérique en particules comprend des particules magnétiques.

3. Procédé suivant la revendication 2, dans lequel les particules magnétiques sont choisies entre des ferrites et le dioxyde de chrome.

4. Procédé suivant la revendication 2 ou 3, dans lequel la matière non polymérique en particules comprend du zirconium.

5. Procédé suivant l'une quelconque des revendications 1 à 4, dans lequel le second composant est choisi dans le groupe comprenant la 2-vinylpyridine, la 4-vinylpyridine, le diméthylaminométhacrylate de méthyle, le vinyltriméthoxysilane et le vinyltriéthoxysilane.

6. Procédé suivant l'une quelconque des revendications 1 à 5, dans lequel le copolymère est choisi dans le groupe des copolymères styrène/2-vinylpyridine, styrène/4-vinylpyridine et styrène/vinyltriéthoxysilane.

7. Procédé suivant la revendication 6, dans lequel le copolymère contient 80 à 97%, sur base molaire, du premier composant, le reste étant le second composant.

8. Procédé suivant l'une quelconque des revendications 1 à 7, dans lequel le rapport en poids de la matière non polymérique se situe dans l'intervalle de 12:1 à 5:1 et le rapport en poids du dispersant polymérique aux monomères vinyliques se situe dans l'intervalle de 1:5 à 1:20.

9. Procédé suivant l'une quelconque des revendications 1 à 8, dans lequel l'agent de réticulation est le divinylbenzène.

10. Procédé suivant l'une quelconque des revendications 1 à 9, dans la première étape duquel la matière non polymérique en particules est préalablement revêtue avec ledit dispersant polymérique, puis lesdits monomères vinyliques et lesdits agents de réticulation sont ajoutés.

11. Procédé suivant l'une quelconque des revendications 1 à 10, dans lequel la polymérisation est conduite avec une phase organique contenant les monomères vinyliques et une phase aqueuse contenant un agent de stabilisation de suspension.

12. Procédé suivant la revendication 11, dans lequel l'agent de stabilisation de suspension est l'alcool polyvinylique.

13. Procédé suivant la revendication 11 ou 12, dans lequel le rapport en poids de la phase organique à la phase aqueuse se situe dans l'intervalle de 1:5 à 1:20.

14. Procédé suivant la revendication 13, dans lequel le rapport en poids de la phase organique à la phase aqueuse se situe dans l'intervalle de 1:10 à 1:16.

15. Des grains polymériques dans une plage de diamètres de 1 à 1000 $\mu$m, comprenant une matière non polymérique en particules et préparés par le procédé suivant l'une quelconque des revendications 1 à 14.

16. Grains polymériques suivant la revendication 15, dont la matière non polymérique en particules consiste en particules magnétiques.

17. Grains polymériques suivant la revendication 16, comprenant du zircon.

**Patentansprüche**

1. Verfahren zum Herstellen von polymeren Perlen, welche nicht polymeres feinkörniges Material enthalten, in einem Korngrößenbereich von 1 bis 1000 Mikrometern, bei dem in einer ersten Stufe das nicht polymere feinkörnige Material in einem Medium dispergiert wird, das ein Vinylmonomer oder mehrere Vinylmonomere, die ausgewählt sind aus der Styrol und Vinyltoluole enthaltenden Gruppe, und ein Vernetzungsmittel enthält, mit einem polymeren Dispergiermittel, das ein Copolymer ist, welches hergestellt ist aus einer ersten Komponente bestehend aus wenigstens einem Monomer, das ausgewählt ist aus der aus vinylaromatischen Kohlenwasserstoffen bestehenden Gruppe, und einer zweiten Komponente bestehend aus wenigstens einem Monomer, das ausgewählt ist aus der aus tertiären Stickstoff enthaltenden Vinylmonomeren und Vinyloxysilanen bestehenden Gruppe, bei dem in einer zweiten Stufe ein Katalysator-Starter zugesetzt wird und in einer dritten Stufe die genannten Vinylmonomeren polymerisiert werden.

2. Verfahren nach Anspruch 1, worin das nichtpolymere feinkörnige Material magnetische Teilchen enthält.

3. Verfahren nach Anspruch 2, worin die magnetischen Teilchen ausgewählt sind aus der aus Ferriten und Chromdioxid bestehenden Gruppe.

4. Verfahren nach Anspruch 2 oder 3, worin das nicht polymere feinkörnige Material Zirkon enthält.

5. Verfahren nach einem der Ansprüche 1 bis 4, worin die zweite Komponente ausgewählt ist aus der aus 2-Vinylpyridin, 4-Vinylpyridin, Methyldimethylaminomethacrylat, Vinyltrimethoxysilan und Vinyltriethoxysilan bestehenden Gruppe.

6. Verfahren nach einem der Ansprüche 1 bis 5, worin das Copolymer ausgewählt ist aus der aus Styrol/2-Vinylpyridin, Styrol/4-Vinylpyridin und Styrol/Vinyltriethoxysilan bestehenden Gruppe.

7. Verfahren nach Anspruch 6, worin das Copolymer 80 bis 97% auf molarer Basis der ersten Komponenfe enthält und der Rest die zweite Komponente ist.

8. Verfahren nach einem der Ansprüche 1 bis 7, worin das Gewichtsverhältnis von nicht polymerem feinkörnigem Material zum polymerem Dispergiermittel in einem Bereich von 12 zu 1 bis 5 zu 1 und das Gewichtsverhältnis des polymeren Dispergiermittels zu Vinylmonomeren in einem Bereich von 1 zu 5 bis 1 zu 20 liegen.

9. Verfahren nach einem der Ansprüche 1 bis 8, worin das Vernetzungsmittel Divinylbenzol ist.

10. Verfahren nach einem der Ansprüche 1 bis 9, worin in der ersten Stufe das genannte nicht polymere feinkörnige Material mit dem genanten polymeren Dispergiermittel vorbeschichtet wird und dann die genannten Vinylmonomeren und die genannten Vernetzungsmittel zugesetzt werden.

11. Verfahren nach einem der Ansprüche 1 bis 10, worin die Polymerisation mit einer organischen Phase, welche die Vinylmonomeren enthält, und einer einen Suspensionsstabilisator enthaltenden wäßrigen Phase durchgeführt wird.

12. Verfahren nach Anspruch 11, worin der Suspensions-stabilisator Polyvinylalkohol ist.

13. Verfahren nach Anspruch 11 oder 12, worin das Gewichtsverhältnis der organischen Phase zur wäßrigen Phase in einem Bereich von 1 zu 5 bis 1 zu 20 liegt.

14. Verfahren nach Anspruch 13, worin das Gewichtsverhältnis der organischen Phase zur wäßrigen Phase in einem Bereich von 1 zu 10 bis 1 zu 16 liegt.

15. Polymere Perlen in einem Größenbereich von 1 bis 1000 $\mu$m, welche nicht polymeres feinkörniges Material enthalten und nach dem Verfahren eines der Ansprüche 1 bis 14 hergestellt sind.

16. Polymere Perlen nach Anspruch 15, worin das nicht polymere feinkörnige Material magnetische Teilchen enthält.

17. Polymere Perlen nach Anspruch 16, welche Zirkon enthalten.